# EUROPEAN PATENT SPECIFICATION

(11) **EP 1 223 151 B1**
(45) Date of publication and mention of the grant of the patent: **30.03.2005**
(21) Application number: 02000386.9
(22) Date of filing: 07.01.2002
(51) Int. Cl.: C04B 41/85, B28B 11/00

(54) **Method and apparatus for decorating ceramic tiles**
Verfahren und Vorrichtung zum Dekorieren von keramischen Fliesen
Procédé et dispositif de décoration de carreaux céramiques

(30) Priority: 05.01.2001 IT BO010003
(43) Date of publication of application: 17.07.2002
(73) Proprietor: Elettro -Software S.r.l., 41015 Monantola (Modena) (IT)
(72) Inventor: Ferrari, Davide, 41015 Nonantola (Modena) (IT)
(74) Representative: Dall'Olio, Giancarlo

(56) References cited:
- EP-A- 1 052 114
- DE-A- 19 709 011
- FR-A- 2 666 052
- PATENT ABSTRACTS OF JAPAN vol. 016, no. 135 (M-1230), 6 April 1992 (1992-04-06) & JP 03 295609 A (IG TECH RES INC), 26 December 1991 (1991-12-26)

## Description

### TECHNICAL FIELD OF THE INVENTION

The present invention relates to the technical field concerned with apparatuses for producing decorated ceramic tiles.

In particular, the invention relates to a method and apparatus for applying enamels or other dyes to the above tiles, so as to obtain particular decorative effects.

### DESCRIPTION OF THE PRIOR ART

The most renowned methods for decorating ceramic tiles provide for the application of enamels, or of other dyes such as for example metal-base salts or enamels, through silk-screen or flexographic processes, or through spray application devices.

The application of metal-base salts, in particular, is mainly carried out on stoneware tiles. The above metal-base salts have the property of deeply penetrating in the tiles. Following such application, the tiles undergo a high temperature process, in which the metal salts react and acquire typical chromatic effects. The tiles are then smoothed to remove their surface layer. Smoothing imparts characteristic color shades to the tiles, similar to those of some natural stones.

Decorations by silk-screen processes are carried out by transferring the enamels from a flat screen, or a screen laid on the outer surface of a rotating drum. Such processes allow decorating the tiles by transferring minimal amounts of dyes, that actually is the amount of dyes that can be retained by the screen. The final result is a substantially "flat" decoration, that is, without thickness, mainly due to the impossibility of an effective determination of the amounts of dye applied in every single portion of the tile.

Due to their peculiar features, spray decoration processes are usually orientated to obtaining substantially even coloring, or in any case, decorations without details. Such decorations are commonly carried out using one or more airbrushes, which operate into suitable application chambers, within which the tiles are continuously transported by suitable conveyor belts. The airbrushes are preferably driven to oscillate in a direction transversal with respect to the transport direction. The combination of the airbrush motion with the advancement motion of the tiles, along with the angular amplitude of the airbrush jet, define the way in which the dyes are laid on the tiles.

It is also known to use a combination of the above described silk-screen and spray methods where the tiles, already subject to a silk-screen decoration process, are further subject to the jet of one or more airbrushes so as to obtain the so-called "streaking". In this case, the airbrushes apply a further layer of dyes (typically the aforementioned metal-base salts) according to random and uncontrollable patterns.

Afterwards, the tiles are treated at a high temperature and then they are smoothed. The streaking creates color zones with shades similar to those of some natural stones, such as some types of marble. However, it has not been possible so far to reproduce more complex decorations by the prior-art methods and apparatus, such as for example decorations that reproduce the particular types of veins that are typical of marble and similar natural stones. Such veins look like more intense coloring patterns compared to the background color, and they provide a pleasant and peculiar depth and transparency effect.

Ceramic tiles decorated in such a way as to look like natural stones are particularly required, since they are less expensive and require less maintenance compared to the original natural stone.

A further known decoration method uses the so-called "dry enamels", normally supplied as powder, that melt at high temperature, and which are applied to the tiles by dropping, and then fixed to the same through heating.

The device for applying the dry enamels usually consists of a sort of hopper containing the powder enamel, provided at the bottom with a valve to allow the controlled passage of an enamel flow. The valve is commanded in phase relation with the passage of a tile below the hopper, to lay on the same tile predefined amounts of product. Automated methods for decorating ceramic tiles are described in JP-A-03 295 609 and FR-A-2 666 052.

### SUMMARY OF THE INVENTION

The main purpose of the present invention is to propose a method for decorating ceramic tiles, which allows to plot predefined decorative patterns with the dyes on the same tiles, reproducible in a controlled manner on each tile.

Another purpose of the invention is to propose a method, which allows a high flexibility and interactivity in the definition and realization of the above patterns.

A further purpose of the invention is to propose apparatus for decorating tiles, which carries out the above method.

The above mentioned objects are wholly obtained, in accordance with the claims, by a method for decorating ceramic tiles which includes the following steps:
a preliminary step comprised of the subsequent phases:
   - generation of at least one decoration line on an image of a tile available in digital form on an electronic processor, the generated line defining a corresponding decorating pattern on a tile being decorated;
   - generation, by the above mentioned electronic processor, of position information data of each significant point of the line within the image of the tile;
   - generation of at least one sequence of commands for activating/deactivating a corresponding device for applying dyes to the tile to be decorated, with the tile being moved forward along a conveying line, and with the commands operating in time relation with the above mentioned position information data:
   - transmission of the position information data and activating/deactivating commands to a control unit for positioning and activating/deactivating the application device, which reproduces the predefined pattern on the tile according to the received position information data.

The method includes also a cyclic working phase, comprised of the subsequent steps:
- actuation, by the control unit, of driving means, whose position can be controlled, in time relation with the forward movement of the tile, for moving the device for applying dyes along the decoration pattern;
- operation, in time relation with the position of said device and of said tile along the conveying line, of the supply of. dyes by the applying device.

The invention relates also to an apparatus, which carries out the above described method, and which includes a digital data electronic processor for generating, on a digital image of a tile, at least one line defining a decoration pattern on a corresponding tile being decorated, and for generating information data on the position of each significant point of the same decoration line within the tile image, with respect to a common reference, and at least one sequence of commands for activating/deactivating corresponding devices for applying dyes;
- means for acquiring the digital image of the tile;
- at least one device for applying dyes to the tile being decorated, situated along a tiles conveying line and adjustable along at least one direction of application not coinciding with the tiles conveying direction, aimed at supplying the dyes to decoration pattern;
- at least one unit for controlling the position of the application device, connected to the data processor, for receiving the position information data and the command sequence from the latter, and also connected to the application device;
- driving means whose position can be controlled, that are connected to the control unit and to the application device and that can be operated in time relation with the tile forward movement, the driving means being aimed at moving the dyes applying device along the decoration pattern or patterns to obtain a corresponding decoration on the tile.

### BRIEF DESCRIPTION OF DRAWINGS

The characteristic features of the present invention, as result from the claims, will be pointed out in the following detailed description with reference to the enclosed drawings, in which:
- Figure 1 is a schematic view, partially in functional diagrams, of the apparatus proposed by the present invention;
- Figure 2 is a schematic, section view taken along the line II-II of Figure 1;
- Figure 3 is a schematic view of a possible display of the decorative lines on the monitor of the electronic processor of the apparatus shown in Figure 1.

### DETAILED DESCRIPTION OF THE INVENTION

With reference to the above drawings, the reference numeral 1 indicates a tile to be decorated by the apparatus 100 proposed by the invention.

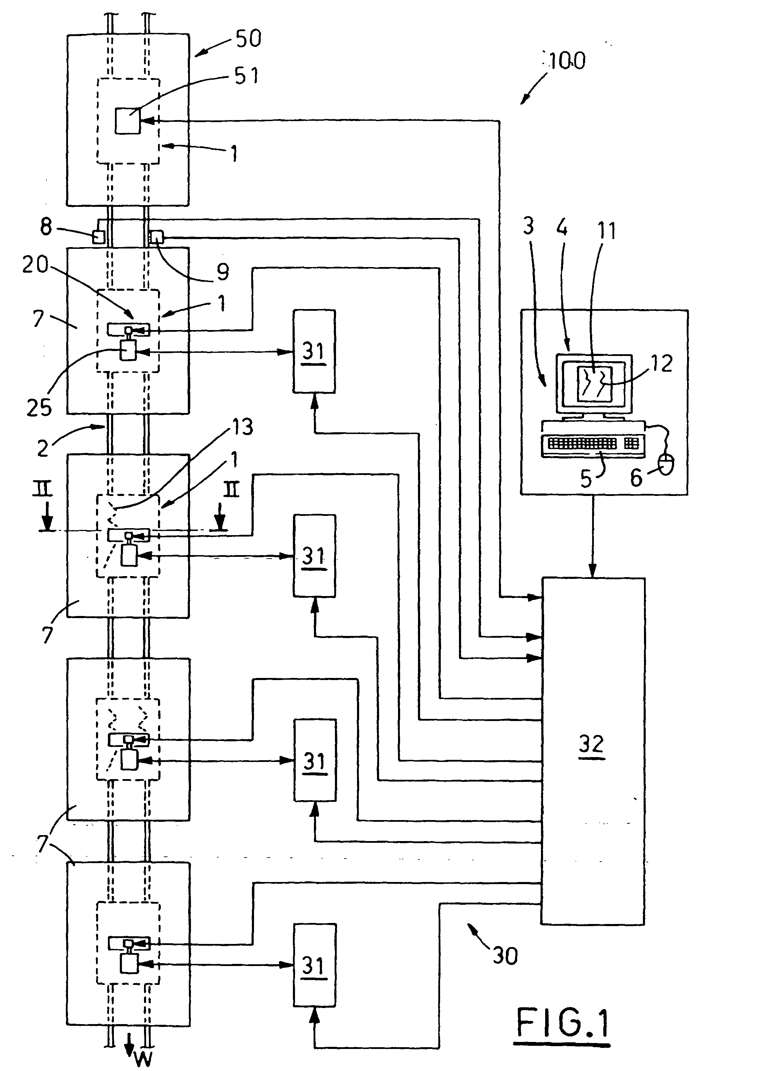

A plurality of tiles 1 are conveyed on a conveying line 2 in a path W and in a predetermined working direction, indicated with an arrow in Figure 1.

According to a preferred embodiment of the proposed process, aimed at obtaining tiles of stoneware decorated in such a way that they are very similar to stone plates, e.g. marble, the tiles 1 have been first decorated e.g. by a traditional silk-screen procedure.

The silk-screen decoration, obtained by application of enamels or metal-base salts of known type, has given the tiles 1 hues and shades typical for marble to be imitated, but without the consistency, thickness and variations of density typical for the marble vein.

According to a first embodiment, the apparatus 100 includes a plurality of streaking chambers 7 of known shape, situated over the conveying line 2 and aligned consecutively along the conveying line.

A device 20, situated inside each of the streaking chambers 7, applies dyes, specially metal-base salts, to the tiles 1.

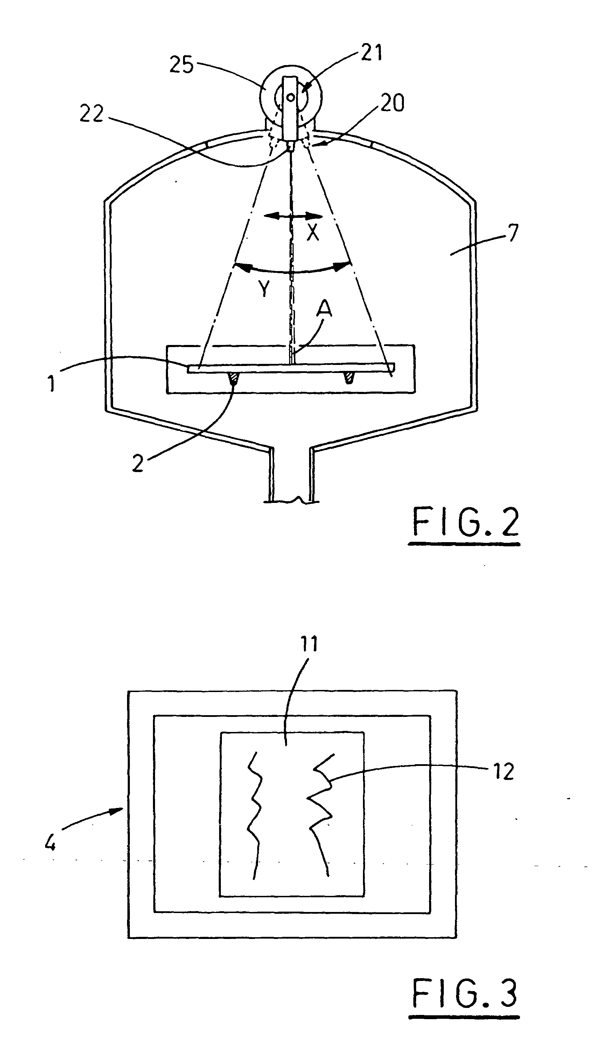

According to the first embodiment, the applying device 20 includes an airbrush 21 (Figure 2), mounted on an actuator 25, whose position is adjustable, so that it oscillates with maximum angular amplitude Y along a direction X crosswise to the above mentioned conveying path W.

The maximum angular amplitude Y allows the airbrush to cover, with its jet of dye, the whole transversal width of the tiles 1.

The airbrush 21 has a nozzle 22, which, according to the described application and differently from the traditional use of the airbrush 21, supplies a jet of dyes of very limited amplitude, preferably of 2-3°.

The above actuator 25 includes preferably a brushless motor, which allows to control precisely the angular position of the airbrush 21, crosswise to the conveying path W.

Due to the above described shape, the airbrush 21 is guided by the actuator 25, in combination with the forward movement of the tiles 1 in path W, along a predetermined decoration pattern 13, which involves each tile 1, in order to decorate the latter.

The way in which the decoration pattern 13 is defined, will become evident from the following description.

Therefore, each described applying device 20 can perform a different decoration on the same tile 1, corresponding to a different decoration pattern 13.

The decoration can be of the same or of a different color, in relation to the decorative effect designed for a particular tile.

It is understood that the particular technique of assembling and operating of the airbrush 21 has been described as a mere, not limiting example.

Actually, other techniques of assembling and operating can be used, without leaving the protective scope of the present invention.

For example, according to another technique, not shown, the airbrush 21 is mounted sliding on an arm, which is crosswise to the conveying path W, and operated by a brushless motor of the above described type.

The above arm can be mounted sliding on tracks in the conveying path W, and operated by a second brushless motor.

This technique, easy to deduce, and for a technician of the field, to realize, would provide a further possibility to control the airbrush 21, thus assuring bigger flexibility of the apparatus 100.

Each airbrush 21, like each corresponding actuator 25, is connected to a control unit 30, which controls continuously the position of the airbrush 21 by operating the actuator 25 and operates the opening and closing of the nozzle 22 in time relation with the position taken by the airbrush 21 and with the movement of the tile 1 to be decorated.

The control unit 30 receives a sequence of commands to activate/deactivate the brushless motor 25 and nozzle 22 of each airbrush 21, as well as coded information data concerning the control of the airbrush 21 position, which define when the airbrush 21 supplies predetermined quantities of the dyes.

The supply moments occur during the passage of the airbrush 21 over the decoration pattern 13.

According to the illustrated embodiment, the control unit 30 includes a plurality of position control units 31, each of which controls a respective brushless motor 25 to control the position of a relative airbrush 21.

The control unit 30 includes also a logic control unit 32, which activates/deactivates the nozzle 22 of each airbrush 21 and operates the above mentioned position control units 31.

The position control units 31 include substantially as many digital processors which are equipped with a control program receiving the above mentioned position control information data related to a decoration pattern 13 of a particular tile to decorate, under the form of coordinates of the points of the decoration pattern 13, on which the airbrush 21 is to be positioned.

Actually, each of the position control units 31 contains position control information concerning a plurality of decoration patterns 13, usually belonging to one panel of the tiles 1 to be decorated.

In fact, a predetermined number of tiles 1 with slightly different decoration, called "panel", is usually formed, in order to obtain not excessively repetitive configuration when the tiles 1 are finally applied.

The panels are decorated in sequence and each panel is repeated indefinitely.

Therefore, the position control information data related to all the decoration patterns 13 belonging to one panel, is stored in the control unit, and the corresponding decoration is reproduced in sequence by the relative airbrush 21.

The aforementioned logic control unit 32 is connected in known way to a device for opening/closing of each nozzle 22 and to each position control unit 31.

The position control unit 31 includes substantially a programmable logic circuit (PLC), to which a suitable control program is connected.

The above mentioned PLC includes also a suitably extended operative memory, which receives and performs, in time relation with the position taken by the tiles 1 on the conveying line 2, a sequence of commands to activate/deactivate the nozzles 22 and the corresponding position control units 31.

The commands related to the position control units 31 include also information concerning the number of each single tile 1 in the corresponding panel and information to synchronize the above mentioned position control units 31 to actuate the correct decoration pattern 13.

Actually, since the tiles 1 move forward spaced apart by short distances, different applying devices can work on different tiles 1, since the latter belong to the same panel.

Thus, in a given moment, the corresponding position control units 31 must actuate the decoration patterns 13 of different tiles.

The logic control unit 32 is also connected to a passage sensor 8, situated near the first applying device 20, and an encoder 9, applied to the conveying line in known way.

This allows the logic control unit 32 to control constantly the position of each tile 1 on the conveying line 2.

The apparatus 100 includes also an electronic processor 3, basically a computer, connected by suitable interfaces to the above mentioned logic control unit 32.

The processor 3 features an application program, which generates, on a digital image 11 of a tile, one or more decorative lines 12, each of which defines a decoration pattern 13 on a tile 1.

The above mentioned application program generates also, for each decorative line 12, the aforementioned position information data, suitably coded, corresponding to each significant point of the line 12.

Actually, each of the significant points represents a corresponding point on the tile 1, in which a predetermined quantity of dyes must be applied.

The digital image 11 usually relates to a sample tile, whose image is acquired by a scanner of known type and available on the market, connected to the processor 3.

As it has been already mentioned, the sample tile can contain a previously applied decoration, e.g. silk-screen, to be completed with other decorations designed to emphasize particular veins characteristic to natural stone.

The decoration can be obtained from a tile of natural stone, whose decoration is to be imitated.

In this case, the lines 12 are performed in such a way as to follow the veins of the sample tile.

According to another embodiment of the present invention, the digital image 11 is created by a suitable program for creating and processing images, which presents fancy motives.

In this case, the lines 11 can be obtained in a quite arbitrary way, to emphasize particular areas of the motives, or to create geometrical motives generated by designer's creativity.

According the preferred embodiment, the lines 11 are made by an operator, who interacts with the processor 3 by input terminals 5, 6, e.g. a keyboard 5 and a mouse 6.

For this purpose, the program includes a suitable procedure for interactive construction of the lines 11.

The lines can be also generated automatically, likewise by a suitable procedure of the above program, which uses known algorithms to identify and delimit, e.g. areas of the image 11 of particular density or chromatic variation, or other similar characteristics.

After the information data relative to all the decorative lines 11 of one tile 1, and possibly of all tiles 1 of a particular panel, the application program associated to the electronic processor 3 generates the corresponding position information data and sequences of commands to send to the control unit 30.

It is to be pointed out that, in the above described and illustrated embodiment, the processor 3 and the control unit 30 are connected on line by always connected communication lines and interfaces.

However, the connections can be performed also off-line, by suitable digital data storing means, such as removable magnetic or optical disks, and by known read/write units, or by connections installed in case of need, such as serial interface or standard parallel lines.

The apparatus 100 includes optionally a recognition station 50, situated upstream of the above mentioned streaking chambers 7, on the conveying line 2, and aimed at identifying which tile 1 of the panel being worked, is passing in a given moment on the conveying line 2 toward the first streaking chamber 7.

The recognition station 50 is electrically connected to the logic control unit 32 to transmit thereto information concerning the analyzed tile 1.

The recognition station 50 checks if the real passing order of the tiles 1 is as expected, and if no changes with respect to this order have been previously made due to e.g. breaking of tiles or inversion of their position occurred during previous working steps.

The recognition station 50 preferably inspects visually the surface of the tiles 1 and includes a camera 51, connected to means for transmission and processing of signal, not shown.

This type of recognition stations is known in the field and usually are available on the market in different configurations.

For example, the recognition station can include a linear scanning camera 51, an interface connecting with an electronic processor and a recognition program, working on the electronic processor.

In this case, the camera 51 can be connected to the processor 3, and from the latter to the logic control unit 32.

There are also recognition stations equipped with their own processor, which can communicate directly with the logic control unit 32.

According to a second embodiment of the apparatus 100, not illustrated since immediately understandable, the actuator 25 of the applying device 20 includes a robotized manipulator of known type, usually formed by a kind of articulated arm, carrying on its free end the airbrush 21 or another device for applying dyes.

The manipulator is controlled by a control unit 30, by a programmed sequence of movements and according to a predetermined number of degrees of freedom, anyway sufficient to allow the reproduction of the programmed decoration patterns on the tiles.

Manipulators commanded on six axes are normally available, and they are more than enough for performing decoration patterns required for the above described apparatus 100.

Also the control unit 30 of the manipulator can receive and use a digitalized sequence of commands to control position of the manipulator, and consequently, of the airbrush 21 or any other applying device associated thereto, as well as the information concerning the control of the decorating product supply, in relation to the tile position, to the applying device and to the decoration to be performed.

In particular, the decorating product can be a dry powder enamel, which is subsequently fastened to the tile by heating.

In this case, the applying device can be a known hopper applying this type of enamel, equipped with a supply valve controlled by the above mentioned sequence of supply control.

Obviously, the procedure according to the present invention can be applied without significant changes to other types of ceramic tiles, e.g. tiles with not smooth surface and imitating pavement or coating plates, e.g. granite or other stones, naturally equipped with abrasions or hollows and prominences, which are characteristic structural features of the stones or are caused by cutting operations.

The above described method includes substantially, a preliminary step and a cyclic working step.

During the preliminary step, the decoration patterns 13 and the commands for the applying devices 20 are prepared and stored in the control unit 30.

During the cyclic working step, the above mentioned commands are executed by the control unit 30 to actuate the applying devices 20 and actuate or deactivate the respective nozzles 22 in correspondence to the passage of the tile 1 being decorated.

The preliminary step includes principally generating, on an image 11 of a tile available in digital form on an electronic processor 3, decoration lines 12, that are aimed at defining a corresponding decoration pattern 13 on a tile 1 to be decorated.

The image 11, visualizing the basic decoration of the tile 1, can be acquired by a scanner from a sample tile, or generated electronically by a suitable program for the electronic processor 3.

Then, the electronic processor 3 generates information data on the position of each significant point of the line 12 falling within the tile image 11.

The above operations are repeated on all tiles 1 belonging to a given panel.

Then, for each tile 1, a sequence of commands is generated for positioning and activating/deactivating for the corresponding dyes applying devices 20 situated in the streaking chambers 7 along the conveying line 2.

Afterwards, the position information and the activating/deactivating commands are transmitted to the control unit 30 of positioning the applying devices 20 and of actuating the nozzles 22 or supplying valves, in case dry enamels are used.

The cyclic working step includes, after the sensor 8 has recognized the passage of a tile 1 in the conveying line 2, actuation in sequence of the airbrushes 21, according to the predetermined frequencies and depending on the position of the tile 1 and on the speed of the conveying line 2.

The actuation of the airbrushes 21 is controlled so that, in each streaking chamber 7, a predefined decoration pattern 13 is performed on the tile 1.

Since the airbrushes 21 can work simultaneously, in a given moment, each of them executes its decoration pattern 13 on different tiles.

Moreover, since the conveying line 2 carries consecutively all the tiles 1 belonging to a given panel, in a given moment, the airbrushes 21 execute the decorations on different tiles 1 of the same panel.

The sequence of these decorations is controlled by the logic control unit 32.

If the apparatus includes the recognition station 50, it is possible to detect variations in the arrival order of the tiles, e.g. caused by a lack of one tile 1 in the panel.

In this case, the logic control unit 32 prevents the airbrushes 21 from executing the decorations related to the missing tile 1 during this cycle.

The advantages allowed by the present inventions result, in the first place, from the possibility of executing decorative patterns on the tiles in a controlled manner, and thereby indefinitely reproducible with accurateness and in a totally automated manner.

A further advantage results from obtaining a high flexibility and interactivity with an operator-designer in the definition and executing of the above patterns.

A further advantage is that of obtaining an apparatus for implementing the aforementioned method, provided with modular features, and thereby versatile and adaptable to a variety of production requirements.

## Claims

1. Method for decorating ceramic tiles, the method comprising:
at least one preliminary operation comprised of the following steps:
- generating, on an image (11) of a tile available in digital form on an electronic processor (3), at least one line (12) for defining a corresponding decoration pattern (13) on a tile (1) being decorated;
- generating, by said electronic processor (3), information data on the position of each significant point of said line (12) falling within said image of tile (11);
- generating at least one sequence of commands for activating/deactivating at least one corresponding device (20) for applying dyes to said tile (1) to be decorated, said tile being moved forward along a relative conveying line (2), said commands being aimed at operating in accordance with said position information data;
- sending said position information and said actuation/deactivation commands to a unit (30) for controlling the position of said application device (20), the latter being aimed at reproducing said decoration pattern (13) on said tile (1), based on said position information data;
a cyclic working step including the following steps:
- operation, by said control unit (30), of driving means (25), whose position can be controlled, in phase relation with the tile (1) forward movement, said driving means being provided for moving said device (20) for applying dyes along said decoration pattern (13);
- actuation, in phase relation with the position taken by said device (20) and of said tile (1) along said transport line (2), of the supply of said dyes by said application device (20);
the method being **characterized in that** passage of a tile (8) is detected along the transport line (2) and the subsequent position of said tile is continuously controlled so that said application device (20) is operated in phase relation with the position taken by said tile (1) along said transport line (2).

2. Method, according to claim 1, **characterized in that** it includes also an initial step, in which said tile image (11) is acquired in digital form by scanning at least one sample tile.

3. Method, according to claim 2, **characterized in that** said sample tile contains a basic decoration, onto which said decoration pattern (13) is to be put.

4. Method, according to claim 2, **characterized in that** said sample tile includes a motive to be reproduced with a corresponding decoration pattern (13).

5. Method, according to claim 1, **characterized in that** it includes also an initial step, in which said tile image in digital form is generated by an image generation program.

6. Method, according to claim 1, **characterized in that** said tile image (11), together with said line (12) being created, are visualized on a video display(4) of said electronic processor (3).

7. Method, according to claim 1, **characterized in that** said line (12) is created as a series of points by an operator, through at least one input terminal (5,6) of said electronic processor (3).

8. Method, according to claim 1, **characterized in that** said line (12) is created automatically, in correspondence to said tile image (11), by a dedicated procedure contained in said electronic processor (3).

9. Method, according to claim 8, **characterized in that** said automatic creation is executed in base of recognition of decorative graphic elements already present in the tile image (11).

10. Method, according to claim 1, **characterized in that** said position information is sent to position control means (31) of said actuators means, and **in that** said sequence of commands of activating/deactivating is sent to logic control means (32) of the operations, physically different from said position control means (31).

11. Apparatus for decorating ceramic tiles including:
- at least one electronic processor (3) for processing digital data, aimed at generating, on a digital image (11) of a tile, at least one line (12) identifying a decoration pattern (13) on a corresponding tile (1) to be decorated, and to generate, for said decoration line (12), information data on the position of each significant point of the same line falling within said tile image (11), with respect to a common reference, and at least one sequence of commands for activating/deactivating at least one corresponding device (20) for applying dyes;
- means for acquiring said digital image of said tile;
- at least one of said devices (20) for applying dyes to said tile (1) to be decorated, arranged along a conveying line (2) of said tiles (1) and adjustable along at least one direction of application (X) not coinciding with the transport path (W) of said tiles, intended to dispense said dyes at said decoration pattern (13);
- at least one unit (30) for controlling the position of said application device (20), connected to said data processor (3) and aimed at receiving said position information data and said command sequence from the latter, and also connected to said application device (20);
- driving means (25) whose position can be controlled, connected to said control unit (30) and to said application device (20);
the device being **characterized in that** it further includes at. least one sensor (8) for detecting the passage of tiles, situated near the inlet of said applying device (20) and connected to said control unit (30), and at least one encoder (9), situated on said conveying line (2) and connected to said control unit (30), and aimed at, together with said passage sensor (8), checking the position of said tile (1) on said conveying line (2), so that said application device (20) can be actuated in phase relation with the advancement of said tile, for applying dyes along said decoration pattern (13) to obtain a corresponding decoration on said tile (1).

12. Apparatus, according to claim 11, **characterized in that** said acquiring means include at least one scanner for reading images.

13. Apparatus, according to claim 11, **characterized in that** said acquiring means include at least one program for creating and processing images.

14. Apparatus, according to claim 11, **characterized in that** it includes also automatic means for generating said decoration lines (11), in relation to decorative motives present on a sample tile image.

15. Apparatus, according to claim 14, **characterized in that characterized in that** said automatic generating means include at least one dedicated program for said electronic processor (13).

16. Apparatus, according to claim 11, **characterized in that** said device (20) for applying dyes includes an airbrush (21), equipped with a nozzle (22) aimed at supplying dyes with a limited angular amplitude (A).

17. Apparatus, according to claim 16, **characterized in that** said airbrush (21) moves along a direction (X) crosswise to said tiles transport path (W).

18. Apparatus, according to claim 16, **characterized in that** said airbrush (21) is situated inside a relative streaking chamber (7).

19. Apparatus, according to claim 11, **characterized in that** said applying device (20) includes at least one applier for dry enamel, equipped with a valve which supplies said dry enamel by dropping.

20. Apparatus, according to claim 11, **characterized in that** said control unit (30) includes logic control means (32) for said applying device (20), and position control means (31) of said actuator means (25), connected to said logic control means (32) and to said actuator means (25), and aimed at receiving and containing said position information, to activate, consequently, said actuator means (25).

21. Apparatus, according to claim 20, **characterized in that** said logic control means (32) include a programmable logic circuit (PLC), containing a dedicated logic control program, and **in that** said position control means (31) include at least one dedicated processor, containing a dedicated position control program.

22. Apparatus, according to claim 21, **characterized in that** it includes, for each of said applying devices (20), at least one dedicated position control processor (31), said dedicated processors (31) being controlled by the same said programmable logic circuit (32).

23. Apparatus, according to claim 11, **characterized in that** said actuator means (25) include at least one brushless motor.

24. Apparatus, according to claim 11, **characterized in that** said actuator means (25) include at least one robotized manipulator carrying on its free end said airbrush (21) and controlled in position by said control unit (30), according to a predetermined number of degrees of freedom, and in time relation to the tiles (1) forward movement.

25. Apparatus, according to claim 11, **characterized in that** it includes also at least one recognition station (50), situated along said conveying line (2), upstream of said application device (20), and aimed at detecting which tile (1) of a panel being presently worked is effectively sent toward said application device (20), said recognition station (50) being connected with said control unit (30) to transmit thereto said identification information.

## Patentansprüche

1. Verfahren zum Dekorieren von keramischen Fliesen, wobei das Verfahren umfaßt:
wenigstens ein vorhergehende Maßname, die aus den folgenden Schritten besteht:
- das Erzeugen, auf einem Bild (11) einer Fliese, das in digitaler Form auf einem elektronischen Prozessor (3) vorliegt, wenigstens einer Linie (12) zum Definieren eines entsprechenden Dekormusters (13) auf einer Fliese (1), die dekoriert wird;
- das Erzeugen, durch den besagten elektronischen Prozessor (3), von Informationsdaten bezüglich der Position jedes signifikanten Punktes der besagten Linie (12), die innerhalb des besagten Bildes der Fliese (11 ) liegt;
- das Erzeugen wenigstens einer Sequenz von Befehlen zur Aktivierung/Deaktivierung wenigstens einer entsprechenden Vorrichtung (20) für das Aufbringen von Farbe auf die besagte zu dekorierende Fliese (1 ), wobei die besagte Fliese entlang eines zugeordneten Förderbandes (2) vorwärts bewegt wird, wobei die besagten Befehle darauf abzielen, daß sie in Übereinstimmung mit den besagten Positionsinformationsdaten übermittelt werden;
- das Übermitteln der besagten Positionsinformationen und der besagten Aktivierungs-/Deaktivierungsbefehle an eine Einheit (30) zum Ansteuern der Position der besagten Aufbringungsvorrichtung (20), wobei die letztere dafür ausgerichtet ist, das besagte Dekormuster (13) auf der besagten Fliese (1) auf der Basis der besagten Positionsinformationsdaten zu reproduzieren;
ein zyklischer Arbeitsschritt, der die folgenden Schritte umfaßt:
- die Beaufschlagung, durch die besagte Ansteuerungseinheit (30), von Antriebselementen (25), deren Position kontrolliert werden kann, in Phasenrelation mit der Vorwärtsbewegung der Fliese (1), wobei die besagten Antriebselemente für das Verfahren der besagten Vorrichtung (20) für das Aufbringen der Farbe entlang des besagten Dekormusters (13) vorgesehen sind;
- das Betätigen, in Phasenrelation mit der durch die besagte Vorrichtung (20) ermittelten Position und der besagten Fliese (1) entlang des besagten Förderbandes (2), der Zuführung der besagten Farbe durch die besagte Aufbringungsvorrichtung (20);
wobei das Verfahren **dadurch gekennzeichnet ist, daß** der Durchgang einer Fliese (8) entlang des Förderbandes (2) ermittelt wird und die anschließende Position der besagten Fliese kontinuierlich kontrolliert wird, so daß die besagte Aufbringungsvorrichtung (20) in Phasenrelation mit der Position angesteuert wird, die von der besagten Fliese (1) entlang des besagten Förderbandes (2) eingenommen wird.

2. Verfahren gemäß Anspruch 1, **dadurch gekennzeichnet, daß** es auch einen Anfangsschritt umfaßt, in dem das besagte Fliesebild (11) in der digitalen Form dadurch erstellt wird, daß wenigstens eine Musterfliese eingescannt wird.

3. Verfahren gemäß Anspruch 2, **dadurch gekennzeichnet, daß** die besagte Musterfliese ein Grundmuster aufweist, auf das das besagte Dekormuster (13) aufgetragen werden soll.

4. Verfahren gemäß Anspruch 2, **dadurch gekennzeichnet, daß** die besagte Musterfliese ein Motiv aufweist, das mit einem entsprechenden Dekormuster (13) reproduziert werden soll.

5. Verfahren gemäß Anspruch 1, **dadurch gekennzeichnet, daß** es auch einen Anfangsschritt umfaßt, in dem das besagte Fliesebild in der digitalen Form durch ein Bilderzeugungsprogramm erzeugt wird.

6. Verfahren gemäß Anspruch 1, **dadurch gekennzeichnet, daß** das besagte Fliesebild (11) zusammen mit der besagten Linie (12), die erzeugt wird, auf einem Videoschirm (4) des besagten elektronischen Prozessors (3) dargestellt wird.

7. Verfahren gemäß Anspruch 1, **dadurch gekennzeichnet, daß** die besagte Linie (12) als eine Reihe von Punkten von einem Operator über wenigstens ein Eingabeterminal (5, 6) des besagten elektronischen Prozessors (3) erzeugt wird.

8. Verfahren gemäß Anspruch 1, **dadurch gekennzeichnet, daß** die besagte Linie (12) automatisch, in Übereinstimmung mit dem besagten Fliesenbild (11), durch ein geeignetes Verfahren erzeugt wird, das in dem besagten elektronischen Prozessor (3) implementiert ist.

9. Verfahren gemäß Anspruch 8, **dadurch gekennzeichnet, daß** die besagte automatische Erzeugung auf der Basis des Erkennens der dekorativen graphischen Elemente durchgeführt wird, die bereits im Fliesenbild (11) vorhanden sind.

10. Verfahren gemäß Anspruch 1, **dadurch gekennzeichnet, daß** die besagten Positionsinformationen an Positionssteuermittel (31) der besagten Stellelemente übermittelt wird, und daß die besagte Sequenz von Befehlen zur Aktivierung/Deaktivierung an logische Mittel (32) zum Steuern der Vorgänge gesandt wird, die sich physisch von den besagten Positionssteuermitteln (31) unterscheiden.

11. Vorrichtung für das Dekorieren keramischer Fliesen, umfassend:
- wenigstens einen elektronischen Prozessor (3) für das Verarbeiten digitaler Daten, der dazu ausgelegt ist, auf einem digitalisierten Bild (11) einer Fliese wenigstens eine Linie (12) zu erzeugen, die ein Dekormuster (13) auf einer entsprechenden zu dekorierenden Fliese (1) identifiziert, und dazu, für die besagte Dekorlinie (12) Informationsdaten bezüglich der Position jedes signifikanten Punktes der gleichen Linie, der innerhalb des besagten Fliesenbildes (11) liegt, in Bezug auf einen allgemeinen Referenzpunkt zu erzeugen, und wenigstens eine Sequenz von Befehlen zur Aktivierung/Deaktivierung wenigstens einer entsprechenden Vorrichtung (20) für das Auftragen der Farbe;
- Mittel zur Aufnahme des besagten digitalisierten Bildes der besagten Fliese;
- daß wenigstens eine der besagten Vorrichtungen (20) für das Auftragen der Farbe auf die besagte zu dekorierende Fliese (1) entlang eines Förderbandes (2) für die besagten Fliesen (1) angeordnet ist und justierbar entlang wenigstens einer Richtung der Auftragung (X) ist, die nicht mit dem Transportweg (W) der besagten Fliesen übereinstimmt, zu dem Zweck, die besagten Farben auf das besagte Dekormuster (13) aufzutragen;
- wenigstens eine Einheit (30) für das Einstellen der Position der besagten Auftragungsvorrichtung (20), die an den besagten Computer (3) angeschlossen ist und die dazu vorgesehen ist, die besagten Positionsinformationsdaten und die besagte Befehlsreihenfolge von der letzteren zu empfangen, und die auch an die besagte Auftragungsvorrichtung (20) angeschlossen ist;
- Antriebselemente (25), deren Position kontrolliert werden kann, die mit der besagten Steuereinheit (30) und der besagten Auftragungsvorrichtung (20) verbunden sind;
wobei die Vorrichtung **dadurch gekennzeichnet ist, daß** sie weiterhin wenigstens einem Sensor (8) für das Ermitteln des Durchgangs der Fliesen umfaßt, der in der Nähe des Einlasses der besagten Auftragungsvorrichtung (20) liegt und der mit der besagten Steuereinheit (30) verbunden ist, und wenigstens einen Kodierer (9), der an dem besagten Förderband (2) angeordnet und mit der besagten Steuereinheit (30) verbunden ist und der dazu dient, zusammen mit dem besagten Durchgangs-Sensor (8) die Position der besagten Fliese (1) auf dem besagten Förderband (2) zu ermitteln, so daß die besagte Auftragungsvorrichtung (20) in Phasenrelation mit der Zuführung der besagten Fliese betätigt werden kann, um Farbstoff entlang des besagten Dekormusters (13) aufzubringen, um eine entsprechende Dekoration auf der besagten Fliese (1 ) zu erzielen.

12. Vorrichtung gemäß Anspruch 11, **dadurch gekennzeichnet, daß** die besagten Aufnahmemittel wenigstens einen Scanner für das Einlesen der Bilder mit einschließt.

13. Vorrichtung gemäß Anspruch 11, **dadurch gekennzeichnet, daß** die besagten Aufnahmemittel wenigstens ein Programm für das Erzeugen und die Verarbeitung von Bildern umfassen.

14. Vorrichtung gemäß Anspruch 11, **dadurch gekennzeichnet, daß** diese auch automatische Mittel für das Erzeugen der besagten Dekorlinien (11) umfaßt, in Beziehung zu den dekorativen Motiven, die auf einem Musterfliesenbild vorhanden sind.

15. Vorrichtung gemäß Anspruch 11, **dadurch gekennzeichnet, daß** die besagten automatischen Erzeugungsmittel wenigstens ein zugeordnetes Programm für den besagten elektronischen Prozessor (13) umfassen.

16. Vorrichtung gemäß Anspruch 11, **dadurch gekennzeichnet, daß** die besagte Vorrichtung (20) für das Auftragen der Farben eine Spritzpistole (21) mit einschließt, die mit einer Düse (22) ausgerüstet ist, die dazu dient, Farben in einem begrenzten Winkelbereich (A) aufzutragen.

17. Vorrichtung gemäß Anspruch 16, **dadurch gekennzeichnet, daß** die besagte Spritzpistole (21) sich entlang einer Richtung (X) bewegt, die senkrecht zum besagten Fliesentransportweg (W) verläuft.

18. Vorrichtung gemäß Anspruch 16, **dadurch gekennzeichnet, daß** die besagte Spritzpistole (21) innerhalb eines relativ streifenden Raumes (7) angeordnet ist.

19. Vorrichtung gemäß Anspruch 11, **dadurch gekennzeichnet, daß** die besagte Auftragungsvorrichtung (20) wenigstens eine Auftragungseinheit für trockene Emaille mit einschließt, die mit einem Ventil ausgerüstet ist, das die besagte trockene Emaille tropfenweise abgibt.

20. Vorrichtung gemäß Anspruch 11, **dadurch gekennzeichnet, daß** die besagte Steuereinheit (30) logische Steuermittel (32) für die besagte Auftragungsvorrichtung (20) umfaßt sowie Positionssteuermittel (31) für die besagten Stellelemente (25), und daß die besagten logischen Steuermittel (32) mit den besagten Stellelementen (25) verbunden sind und dazu dienen, die besagten Positionsinformationen aufzunehmen und zu speichern, um nachfolgend die besagten Stellelemente (25) zu aktivieren.

21. Vorrichtung gemäß Anspruch 20, **dadurch gekennzeichnet, daß** die besagten logischen Steuermittel (32) eine programmierbare Koinzidenzschaltung (PLC) umfassen und ein zugeordnetes logisches Steuerprogramm enthalten, und dadurch, daß die besagten Positionssteuermittel (31) wenigstens einen zugeordneten Prozessor umfassen, der ein zugeordnetestes Positionssteuerprogramm enthält.

22. Vorrichtung gemäß Anspruch 21, **dadurch gekennzeichnet, daß** sie für jede der besagten Auftragungsvorrichtungen (20) wenigstens einen zugeordneten Positionssteuerprozessor (31) umfaßt, wobei die besagten zugeordneten Prozessoren (31) durch den gleichen besagten programmierbaren logischen Schaltkreis (32) angesteuert wurden.

23. Vorrichtung gemäß Anspruch 11, **dadurch gekennzeichnet, daß** die besagten Stellelemente (25) wenigstens einen bürstenlosen Motor umfassen.

24. Vorrichtung gemäß Anspruch 11, **dadurch gekennzeichnet, daß** die besagten Stellelemente (25) wenigstens einen computergesteuerten Manipulator umfassen, der an seinem freien Ende die besagte Spritzpistole (21) trägt und dessen Position durch die besagte Steuereinheit (30) kontrolliert wird, entsprechend einer vorbestimmten Anzahl von Freiheitsgraden und in zeitlichem Bezug zur Vorwärtsbewegung der Fliesen (1).

25. Vorrichtung gemäß Anspruch 21, **dadurch gekennzeichnet, daß** sie ferner wenigstens eine Erkennungsstation (50) umfaßt, die entlang des besagten Förderbandes (2) angeordnet ist, stromaufwärts von der besagten Auftragungsvorrichtung (20), und die dazu vorgesehen ist, zu ermitteln, welche der Fliesen (1) einer Anordnung, die momentan bearbeitet wird, effektiv in Richtung auf die besagte Auftragungsvorrichtung (20) bewegt wird, wobei die besagte Erkennungsstation (50) mit der besagten Steuereinheit (30) verbunden ist, um die besagten Identifizierungsinformationen zu übermitteln.

## Revendications

1. Procédé destiné à décorer des carreaux de céramique, le procédé comprenant :
au moins une opération préliminaire comprenant les étapes suivantes consistant à :
- générer, sur une image (11) d'un carreau disponible sous forme numérique sur un processeur électronique (3), au moins une ligne (12) destinée à définir un modèle (13) de décoration correspondant sur un carreau (1) qui va être décoré ;
- générer, au moyen dudit processeur électronique (3), des données d'informations sur la position de chaque point significatif de ladite ligne (12) qui s'inscrit dans ladite image de carreau (11) ;
- générer au moins une séquence de commandes destinées à activer/désactiver au moins un dispositif correspondant (20) destiné à appliquer des colorants audit carreau (1) à décorer, ledit carreau étant déplacé vers l'avant sur une chaîne (2) de transport respectif, lesdites commandes étant destinées à fonctionner conformément auxdites données d'informations sur la position ;
- envoyer lesdites informations de position et lesdites commandes d'activation / de désactivation à une unité (30) destinée à commander la position dudit dispositif (20) d'application, ce dernier étant destiné à reproduire ledit modèle (13) de décoration sur ledit carreau (1), sur la base desdites données d'informations de position ;
une étape de travail cyclique comprenant les étapes suivantes consistant à :
- faire fonctionner, au moyen de ladite unité (30) de commande, un moyen (25) d'entraînement, dont la position peut être contrôlée, en relation de phase avec le mouvement vers l'avant du carreau (1), ledit moyen d'entraînement étant fourni afin de déplacer ledit dispositif (20) destiné à appliquer des colorants sur ledit modèle (13) de décoration ;
- actionner, en relation de phase avec la position adoptée par ledit dispositif (20) et dudit carreau (1) sur ladite chaîne (2) de transport, la fourniture desdits colorants par ledit dispositif (20) d'application ;
- le procédé étant **caractérisé en ce que** le passage d'un carreau (8) est détecté sur la chaîne (2) de transport et la position consécutive dudit carreau est commandée de manière continue de façon à ce que ledit dispositif (20) d'application fonctionne en relation de phase avec la position prise par ledit carreau (1) sur ladite chaîne (2) de transport.

2. Procédé, selon la revendication 1, **caractérisé en ce qu'**il comprend également une étape initiale, où ladite image (11) de carreau est acquise sous forme numérique en balayant au moins un carreau échantillon.

3. Procédé, selon la revendication 2, **caractérisé en ce que** ledit carreau échantillon contient une décoration de base, sur laquelle ledit modèle (13) de décoration va être placé.

4. Procédé, selon la revendication 2, **caractérisé en ce que** ledit échantillon de carreau comprend un motif à reproduire avec un modèle (13) de décoration correspondant.

5. Procédé, selon la revendication **1, caractérisé en ce qu'**il comprend également une étape initiale, où ladite image de carreau sous forme numérique est générée par un programme de génération d'image.

6. Procédé, selon la revendication 1, **caractérisé en ce que** ladite image (11) de carreau, ainsi que ladite ligne (12) qui va être créée, sont visualisées sur un écran vidéo (4) dudit processeur électronique (3).

7. Procédé, selon la revendication 1, **caractérisé en ce que** ladite ligne (12) est créée sous la forme d'une série de points par un opérateur, par l'intermédiaire d'au moins un terminal (5, 6) d'entrée dudit processeur électronique (3).

8. Procédé, selon la revendication 1, **caractérisé en ce que** ladite ligne (12) est automatiquement créée, en correspondance avec ladite image (11) de carreau, par une procédure dédiée contenue dans ledit processeur électronique (3).

9. Procédé, selon la revendication 8, **caractérisé en ce que** ladite création automatique est exécutée sur la base de la reconnaissance des éléments graphiques décoratifs déjà présents dans l'image (11) de carreau.

10. Procédé, selon la revendication 1, **caractérisé en ce que** lesdites informations de position sont envoyées à un moyen (31) de commande de position dudit moyen d'actionnement, et **en ce que** ladite séquence de commandes d'activation/de désactivation est envoyée à un moyen (32) de commande logique des opérations, physiquement différent dudit moyen (31) de commande de position.

11. Appareil destiné à décorer des carreaux de céramique comprenant :
- au moins un processeur électronique (3) destiné à traiter des données numériques, destiné à générer, sur une image (11) numérique d'un carreau, au moins une ligne (12) qui identifie un modèle (13) de décoration sur un carreau correspondant (1) à décorer, et à générer, pour ladite ligne (12) de décoration, des données d'informations sur la position de chaque point significatif de la même ligne s'inscrivant dans ladite image (11) de carreau, par rapport à une référence connue, et au moins une séquence de commandes destinées à activer/désactiver au moins un dispositif correspondant (20) destiné à appliquer des colorants ;
- un moyen destiné à acquérir ladite image numérique dudit carreau ;
- au moins l'un parmi lesdits dispositifs (20) destinés à appliquer des colorants audit carreau (1) à décorer, agencés sur une chaîne (2) de transport desdits carreaux (1) et réglables dans au moins une direction d'application (X) qui ne coïncide pas avec le trajet (W) de transport desdits carreaux, destiné à distribuer lesdits colorants audit modèle (13) de décoration ;
- au moins une unité (30) destinée à régler la position dudit dispositif (20) d'application, connectée audit processeur (3) de données et destinée à recevoir lesdites données d'informations de position et ladite séquence de commandes depuis ce dernier, et également connectée audit dispositif (20) d'application ;
- un moyen (25) d'entraînement dont la position peut être commandée, connecté à ladite unité (30) de commande et audit dispositif (20) d'application ;
- le dispositif étant **caractérisé en ce qu'**il comprend en outre au moins un capteur (8) destiné à détecter le passage des carreaux, situé à proximité de l'entrée dudit dispositif (20) d'application et connecté à ladite unité (30) de commande, et au moins un encodeur (9), situé sur ladite chaîne (2) de transport et connecté à ladite unité (30) de commande, et destiné, en même temps que ledit capteur (8) de passage, à vérifier la position dudit carreau (1) sur ladite chaîne (2) de transport, de façon à ce que ledit dispositif (20) d'application puisse être actionné en relation de phase avec l'avancement dudit carreau, afin d'appliquer des colorants sur ledit modèle (13) de décoration pour obtenir une décoration correspondante sur ledit carreau (1).

12. Appareil, selon la revendication 11, **caractérisé en ce que** ledit moyen d'acquisition comprend au moins un scanner destiné à lire des images.

13. Appareil, selon la revendication 11, **caractérisé en ce que** ledit moyen d'acquisition comprend au moins un programme destiné à créer et traiter des images.

14. Appareil, selon la revendication 11, **caractérisé en ce qu'**il comprend également un moyen automatique destiné à générer lesdites lignes (11) de décoration, par rapport aux motifs décoratifs présents sur une image d'un échantillon de carreau.

15. Appareil, selon la revendication 14, **caractérisé en ce que** ledit moyen de génération automatique comprend au moins un programme dédié pour ledit processeur électronique (13).

16. Appareil, selon la revendication 11, **caractérisé en ce que** ledit dispositif (20) destiné à appliquer des colorants comprend un aérographe (21), équipé d'une buse (22) destinée à fournir les colorants avec une amplitude angulaire limitée (A).

17. Appareil, selon la revendication 16, **caractérisé en ce que** ledit aérographe (21) se déplace dans une direction (X) en travers dudit trajet (W) de transport de carreaux.

18. Appareil, selon la revendication 16, **caractérisé en ce que** ledit aérographe (21) est situé à l'intérieur d'une chambre (7) de veinage respectif.

19. Appareil, selon la revendication 11, **caractérisé en ce que** ledit dispositif (20) d'application comprend au moins un applicateur pour émail sec, équipé d'une vanne qui fournit ledit émail sec en le laissant s'écouler.

20. Appareil, selon la revendication 11, **caractérisé en ce que** ladite unité (30) de commande comprend un moyen (32) de commande logique pour ledit dispositif (20) d'application, et un moyen (31) de commande de position dudit moyen (25) d'actionnement, connecté audit moyen (32) de commande logique et audit moyen (25) d'actionnement, et destiné à recevoir et à contenir lesdites informations de position, pour activer, par conséquent, ledit moyen (25) d'actionnement.

21. Appareil, selon la revendication 20, **caractérisé en ce que** ledit moyen (32) de commande logique comprend un circuit logique programmable (PLC), contenant un programme de commande logique dédié, et **en ce que** ledit moyen (31) de commande de position comprend au moins un processeur dédié, contenant un programme de commande de position dédié.

22. Appareil, selon la revendication 21, **caractérisé en ce qu'**il comprend, pour chacun parmi lesdits dispositifs (20) d'application, au moins un processeur (31) de commande de position dédié, lesdits processeurs dédiés (31) étant commandés par ledit même circuit logique programmable (32).

23. Appareil, selon la revendication 11, **caractérisé en ce que** ledit moyen (25) d'actionnement comprend au moins un moteur sans balais.

24. Appareil, selon la revendication 11, **caractérisé en ce que** ledit moyen (25) d'actionnement comprend au moins un manipulateur robotisé supportant sur son extrémité libre ledit aérographe (21) et réglé en position par ladite unité (30) de commande, selon un certain nombre prédéterminé de degrés de liberté, et en relation temporelle avec le mouvement vers l'avant des carreaux (1).

25. Appareil, selon la revendication 11, **caractérisé en ce qu'**il comprend également au moins un poste (50) de reconnaissance, situé sur ladite chaîne (2) de transport, en amont dudit dispositif (20) d'application, et destiné à détecter quel carreau (1) d'un panneau qui est en train d'être travaillé est réellement envoyé vers ledit dispositif (20) d'application, ledit poste (50) de reconnaissance étant connecté à ladite unité (30) de commande afin de lui transmettre lesdites informations d'indentification.
